# EUROPEAN PATENT APPLICATION

(11) **EP 1 172 949 A1**
(43) Date of publication of application: **16.01.2002**
(21) Application number: 00114856.8
(22) Date of filing: 11.07.2000
(51) Int. Cl.: H04B 10/10

(54) **Auto-tracking method for a free space optical communication system**

(71) Applicant: Media Lario S.r.L., 23842 Bosisio Parini (LC) (IT)
(72) Inventor: Valenzuela, Arnoldo, Dr., 81825 München (DE); Mantica, Pier Giuseppe, 23881 Airuno LC (IT); Marioni, Fabio, 21047 Saronno VA (IT)
(74) Representative: Kunz, Herbert, Dr.

(57) **Abstract**

A free space optical communication system comprises a first unit (21) having a first transmitter (TX1) and a first receiver (RX1) and a second unit (22) having a second receiver (RX2) corresponding to the first transmitter and a second transmitter (TX2) corresponding to the first receiver, wherein the first and second transmitter and the first and second receiver comprise a reflective optical telescope, and optical fibre positioned in the focal region of the reflective optical telescope, and a positioning unit for moving the optical fibre in the direction of the optical axis of the telescope and within a plane perpendicular thereto. The unit is mounted on a tip-tilt positioning system electronically controlled (gimbal). This system provides an optical tracking function allowing a stable, secure, and high-bandwidth optical communication link.

## Description

The present invention relates to an autonomous auto-tracking function for a free space optical communication system, a communication method, and to a transmitter and receiver position aligning method for high bandwidth optical data transmission.

The increased need for high bandwidth (high data rate) communication links induced by the recent growth of the Internet and the mobile communication led to renewed interest in free space optical communication (Whipple, "Free space communications connects", Photonics at work, October 1999). In free space optical communications the data are transmitted through a communication link between a transmitting station and a receiving station by a laser beam preferably having a frequency of about 1550nm without using a physical medium like an optical fibre or the like. Depending on the weather conditions, communication links over a distance of several kilometers with a bandwidth of up to 2.5GB per second have been demonstrated (P.F. Szajowski et al., "Key elements of high speed WTM terrestrial free space optical communications systems", SPIE paper No. 3932-01). Such free space optical telecommunication links are specially useful for connecting facilities having high data transmission needs like banks or universities in metropolitan areas with one another. Another possible application is the live and high bandwidth broadcasting of sports events, where an optical free space communication link can be set up temporarily with low costs.

In order to avoid health risks by the laser radiation, laser power has to be low (a few milliwatts) and the beam diameter must be large, about several ten centimeters. To establish an optical free space communication link the optical signal therefore has to be coupled out of an optical fibre network and directed with a transmission telescope over the desired distance directly to the receiving telescope where the received beam has to be concentrated and coupled into another optical fibre network.

One problem of long distance free space optical communication is the necessity of exact alignment of the transmitter and the receiver unit. Furthermore, the exact alignment of the optical elements has to be maintained or at least be reestablished within a short time period against external influences like seismic movements of the sites and buildings where the optical units are mounted, ageing and degrading of structures, wind load and other climatic influences like fog, snow, and rain.

A further desirable feature of free space communication is the possibility of statically and dynamically adapting the performance of the optical elements to the characteristics of the specific link in which they are inserted. This feature would by far increase the quality of the communication and would also allow the reconfiguration of the same device for different applications, with a significant benefit in terms of product standardization and economies of scale.

It is therefore an object of the present invention to provide a free space optical communication system and method which avoids the problems and disadvantages encoutered with prior art systems and methods.

It is a further object of the present invention to provide a free space optical communication system and method which facilitates the alignment of transmitter and receiver units.

It is a still further object of the present invention to provide a free space optical communication system and method which provides a continuous and reliable communication link also under varying external conditions.

### SUMMARY OF THE INVENTION

The present invention provides a free space optical communication system comprising a first unit having a first transmitter and a first receiver and a second unit having a second receiver corresponding to the first transmitter and a second transmitter corresponding to the first receiver, wherein the first and second transmitter and the first and second receiver comprise a reflective optical telescope, an optical fibre link positioned in the focal region of the reflective optical telescope, and a positioning unit for moving the optical fibre in the direction of the optical axis of the telescope and within a plane perpendicular thereto.

The unit may be mounted on a tip-tilt positioning system electronically controlled (gimbal).

The free space optical communication system according to the present invention allows a static and dynamic adaptation of the transmission performance and characteristics to the static and dynamic conditions. The static conditions include for example the distance between transmitter and receiver. It is so possible by a static positioning of the emitting optical fibre exit plane the emitter telescope and/or of the receiving optical fibre entrance plane within of the receiver telescope to adapt standard telescope units to different communication distances and conditions. Therefore, relevant economies of scale can be realized. Among the dynamic conditions are seismic movements, atmospheric and weather conditions etc. The optical communication system according to the invention allows a dynamic adaption to these external influences by a feedback control of the position of the receiving optical fibre link within the optical receiver telescope.

The optical axis of the transmitter telescope and the receiver telescope in the first and second unit are preferably arranged parallel to each other. It is therefore possible to use the positional information detected by the receiver unit to correctly align the position of the emitting optical fibre within the transmitter telescope.

Preferably the optical fibre positions are controllable by a manual control device for carrying out setup operations.

The present invention further provides an optical transmitter unit comprising a reflective optical telescope, an emitting optical fibre exit plane positioned in a focal region of the telescope, a z-positioning unit for moving the emitting optical fibre in the direction of the optical axis (z-axis) of the telescope for varying the beam divergence of the light beam emitted by the telescope, and an x-y-positioning unit for moving the emitting optical fibre in the x-y-plane perpendicular to the optical axis of the telescope for varying the direction of the light beam emitted by the telescope.

The movement of only one movable part, i.e. the emitting optical fibre terminal thus allows control of the direction of the emitted (visible or infrared) light beam and its divergence (and power density). This ensures fast response times and a reliable operation also under unfavourable outdoor conditions.

The present invention still further provides an optical receiver unit comprising a reflective optical telescope, a receiving optical fibre entrance plane positioned in the focal region of the telescope, a z-positioning unit for moving the receiving optical fibre in the direction of the optical axis (z-axis) of the telescope, and an x-y-positioning unit for moving the receiving optical fibre entrance plane in an x-y-plane perpendicular to the optical axis of the telescope.

The movement of the receiving optical fibre entrance plane within the x-y-plane perpendicular to the optical axis the optical receiver unit according to the present invention allows a detection of the intensity profile within the receiver telescope. The receiving optical fibre entrance plane can then statically or dynamically be moved to the position with the highest light intensity.

Preferably the transmitter telescope and the receiver telescope comprise a primary mirror and a secondary mirror for widening and concentrating the light beam, respectively.

The present invention still further provides a method of aligning the positions of an optical transmitter unit and a corresponding optical receiver unit, the receiver unit comprising a reflective optical telescope with a receiving optical fibre entrance plane positioned in the focal region of the telescope, the method comprising the steps of determining the intensity distribution of a received light in the focal plane of the telescope, and moving the optical fibre to the position within the focal plane receiving the highest light intensity.

The intensity distribution within a plane perpendicular to the optical axis of the receiver telescope may be sensed by a scanning movement of the receiving optical fibre entrance plane or by a fibre bundle of several, for example seven, fibres forming the receiving entrance plane and comparing the respective detected light intensities.

The detected light intensity profile can be used for a feedback operation in order to dynamically place the receiving optical fibre to the position with the highest detected light intensity.

For setting up a communication link between transmitter telescope and receiver telescope the z-direction-position of the emitting optical fibre exit plane in the transmitter telescope can be moved into an intra-focal position to produce a divergent beam for facilitating the optical spatial aquisition operation of the receiver telescope. For the same purpose the emitting optical fibre entrance plane can be moved in the perpendicular x-y-plane to change the beam direction until the transmitted beam is detected by the receiver telescope.

The present invention still further provides a free space optical communication method between a reflective transmitter telescope having an emitting optical fibre exit plane positioned in the focal region of the telescope and a reflective receiver telescope having a receiving optical fibre entrance plane positioned in the focal region of the receiver telescope, the method comprising the steps of transmitting a visible or infrared light beam carrying the user information from the optical transmitter telescope to the optical receiver telescope, determining the received light intensity in a plane perpendicular to the optical axis of the receiver telescope, moving the receiving optical fibre into a position within the x-y-plane receiving the highest light intensity.

According to a preferred embodiment the loop is closed by moving in the same x, y position the tranmitting optical fibre of the same unit. A gimbal can be used to speed up the beam orientation and to increase the range of compensation of the beam direction.

The dependent claims describe further preferred features of the present invention.

### BRIEF DESCRIPTION OF THE DRAWINGS

Further objects, features, and advantages of the invention will become more readily apparent from the following description of preferred embodiments thereof in connection with the attached drawings in which:
- Fig. 1: is a schematic illustration of a typical configuration of a free space optical communication system according to the present invention;
- Fig. 2: is a block diagram of the optical communication system of Fig. 1;
- Fig. 3: is a block diagram of an embodiment of the variable focal plane system according to the present invention;
- Fig. 4: is a schematic status diagram representing the operation of an embodiment of the optical communication system according to the present invention;
- Fig. 5: is a flowchart illustrating the basic operations of an embodiment of the optical communication system according to the present invention;
- Fig. 6: is a schematic illustration of the scan movement of the receiving optical communication link in the focal plane of the receiver telescope according to the present invention;
- Fig. 7: is a flow diagram illustrating a first embodiment of the continuous tracking function according to the present invention;

- Fig. 8: is a cross-sectional view of an optical fibre bundle used for a receiving optical fibre link;
- Fig. 9: is a schematic illustration of a tracking path of a receiving optical fibre link;
- Fig. 10: is a schematic illustration of an embodiment of the detection unit of Fig. 3; and
- Fig. 11: is a flow diagram illustrating a second embodiment of an auto-tracking function according to the present invention.

### DETAILED DESCRIPTION OF PREFERRED EMBODIMENTS

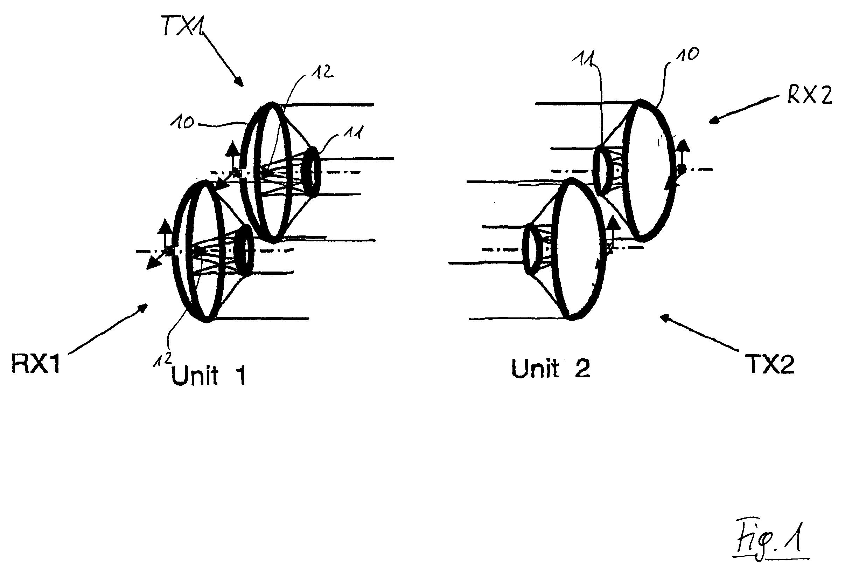

Fig. 1 shows an embodiment of a free space optical communication system to which the present invention can be applied. The optical communication system comprises binocular units, unit 1 and unit 2 each having one transmitter telescope (TX1 and TX2, respectively) and one receiver telescope (RX1 and RX2, respectively). In the embodiment shown in Fig. 1 every telescope comprises a primary mirror 10 and a secondary mirror 11 which are mounted such that a beam emitted from the exit plane of an optical fibre 12 is converted into a parallel light beam having a diameter approximately equal to the diameter of the primary mirror 10. On the receiver side the telescope carries out the reverse function and concentrates the light received by the primary mirror 10 through the secondary mirror 11 into an optical fibre entrance plane 12. The dimensions of the mirrors and their materials may be chosen according to the respective application conditions, for example the distance between unit 1 and unit 2, atmospheric conditions etc. It should be acknowledged here that the configuration shown in Fig. 1 is only one example of a free space optical communication system to which the present invention can be applied. The range of applications of the present invention is, however, very large and can suit itself to communication units based on a plurality of different telescope configurations. As an example, a telescope having a focal length of 500mm, a primary mirror diameter of 200mm and a secondary mirror diameter of 50mm may be employed. The optical fibre preferably has a diameter of less than 150µm.

The communication link shown in Fig. 1 operates in full duplex mode featuring two links, one from unit 1 (TX1) to unit 2 (RX2) and the second one from unit 2 (TX2) to unit 1 (RX1). The two links can operate at full capacity and their correlation is guaranteed by the spatial separation.

The operation of each unit is supervised by a variable focal plane system that acts on the position of the optical fibre dependent on a selected operation mode and on the signal level detected in the focal plane (or a neighbouring parallel plane), as will be discussed later in more detail.

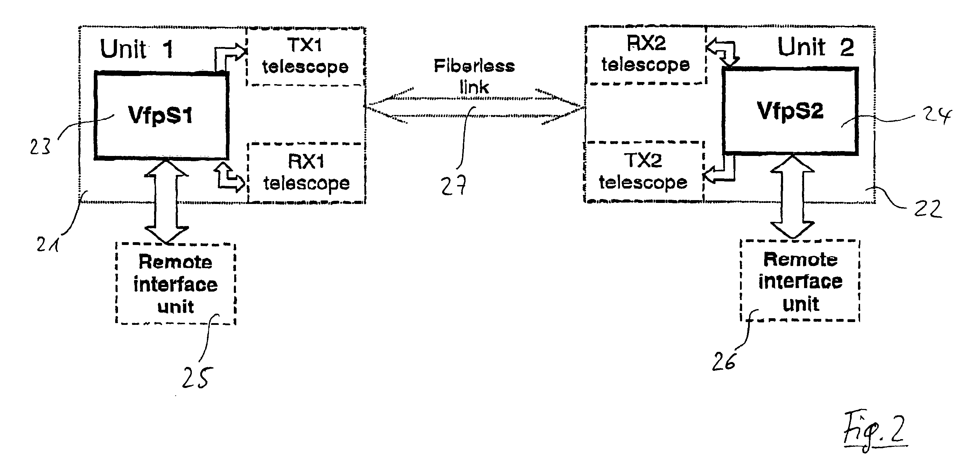

Fig. 2 is a schematic block diagram of the functional elements of the communication system shown in Fig. 1. Unit 1 as well as unit 2 comprise as central control units variable focal plane systems 23, 24, which control the operation of transmitter and receiver telescopes and on the other hand carry out operations commanded by the remote interface units 25, 26.

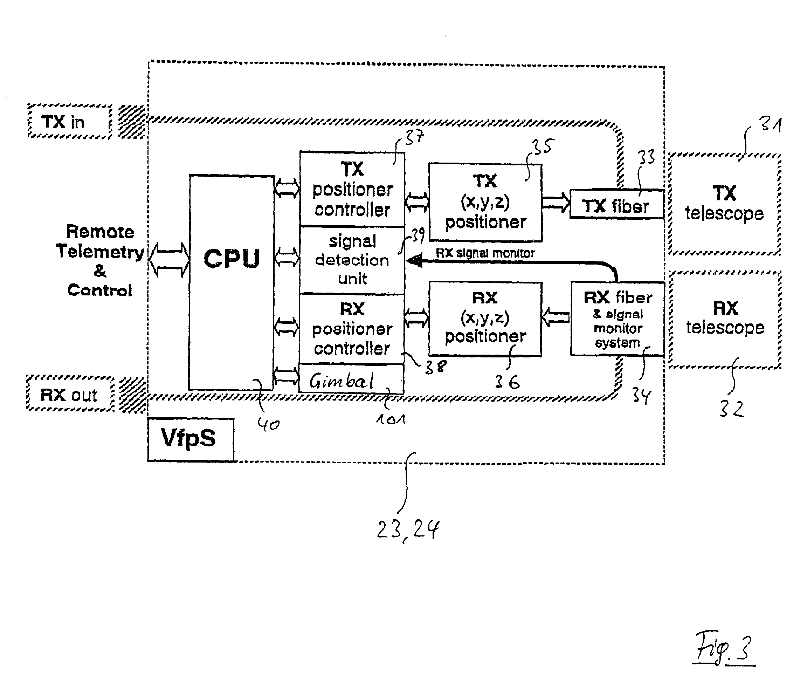

The variable focal plane system 23, 24 is shown in more detail in Fig. 3. The variable focal plane system 23, 24 comprises transmitter and receiver optical fibre links 33, 34 positioned in the focal region of transmitter and receiver telescopes 31, 32, respectively. The optical fibre is placed near the focal point of the telescope thus allowing direct coupling of the light from an emitting optical fibre into the transmitter telescope and from a receiver telescope into the receiving optical fibre. The direct coupling has the advantage of high transmission capacity and low noise.

The variable focal plane system 23, 24 further comprises x-y-z-positioners 35, 36 for moving the optical fibre in three dimensions. The positioners 35, 36 are controlled by position controllers 37, 38 under control of a central processing unit 40 which receives a detection signal from signal detection unit 39.

The operation of the variable focal plane system 23, 24 is as follows. An optical signal in the infrared or visible frequency range as carrier wave for an information signal is received by the optical fibre of the transmitter telescope. The signal is then emitted via the emitting optical fibre 33 into the transmitter telescope 31 for transmission over the communication link. The receiver telescope 32, on the other hand, receives an optical signal from the transmitter telescope of the opposed unit. The signal is concentrated by the telescope to the receiving optical fibre 34 which includes a signal monitor system monitoring the spatial intensity distribution of the received signal within the focal plane, as will be discussed in more detail below. The signal monitor system preferably comprises a beam splitter for coupling out a portion of the received signal. The signal detection unit 39 detects the received light intensity dependent on the x-y-plane perpendicular to the optical axis of the receiver telescope. The result is input to CPU 40 which in turn commands the position controller 38 carrying out a positioning movement of positioner 36 such that the receiving optical fibre assumes a specific position dependent on the monitoring result. The position may preferably be the position with the highest detected light intensity. The detection result of the signal detection unit 39 can further be used for controlling, by position controller 37 and transmitter positioner 35, the special position of the emitting optical fibre 33 in order to control the transmitted light beam. By moving the emitting optical fibre in the x-y-plane perpendicular to the optical axis of the transmitter telescope the beam direction can be adjusted and by movement in z-direction (along the optical axis) the beam divergence can be influenced. Assuming that the optical axis of receiver and transmitter telescopes of both units forming the free space optical communication link are arranged parallel to each other the position error signal detected by the signal detection unit 39 can be used to correct and adjust the beam direction and divergence of the transmitted light beam.

Employing a reflective optical telescope the shape of the reflected light beam of a point light source depends on the position of the point light source in the focal region of the mirror. If the position of the point light source deviates in the x-y-plane the reflected wave front is inclined relative to the optical axis. Is the point light source closer to the mirror than the focal point, a diverging light beam results and if the light source is positioned away from the focal point, a converging light beam results. The imageing characteristics of different mirror geometries are for example discussed in, for example, "OPTICS" by M.V. Klein and T.E. Furtak (John Wiley & Sons) or in "Telescope Optics" by H. Rutton and M. van Venrooij (Willman-Bell, Inc.).

The variable focal plane system according to the present invention can serve the following functions for an optical communication link:
(1) Easy auto-connection at the link startup.
   At the startup of the communication link the two units are manually aligned roughly by using a "visual" pointing scope. Then the system can automatically be controlled to find the precise position of the corresponding unit and lock to it.
(2) Maintenance of the link between connected units under external disturbances
   During system operation the alignment of the two units can be disturbed by external factors as seismic movements, ageing and degrading of mechanic structures, wind load and weather influences. With the variable focal plane system (VfpS) it is possible to perform an "auto-tracking" function in which most of the disturbances can be compensated automatically to maintain a proper link between the corresponding units.
(3) Auto-recovering of the link after a blackout
   The link may be interrupted as a result of an intended switch-off, an electrical blackout or adverse weather conditions producing higher attenuation than the maximum amount allowed. In these cases the system using VfpS is able to start a routine to reestablish the link as soon as the grounds for the blackout have been removed.
   By using a couple of matched transmitter and receiver telescopes whose characteristics can be varied independently, the speed of the link restore can be significantly increased in case of a wide angle mispointing.
(4) adjustment of the illumination angle to the specific link conditions
   The illumination angle produced by the transmitter telescope at the receiver entrance pupil can be set depending on the distance between the stations. The VfpS system can also be adapted to maintain the link under particular environmental conditions under which a standard mode could not permit communication.
(5) Adjustment of the receiving fibre position to the specific link conditions
   The position of the receiving fibre is preferably automatically adjusted to maximize the received signal and so to ensure the best possible transmission quality.
(6) Adjustment of emitted power in order to avoid saturation problems
   The signal level can be attenuated during real-time operation by moving the optical fibre entrance and exit planes along the optical axis of the transmitter and receiver telescopes.
(7) Scan range
   The optical fibre entrance planes can be moved over a large volume centered around the focus of the respective telescope. This makes it possible to recover even large pointing errors and allows a remarkable freedom in selecting the transmission and radiation characteristics of the communication link.

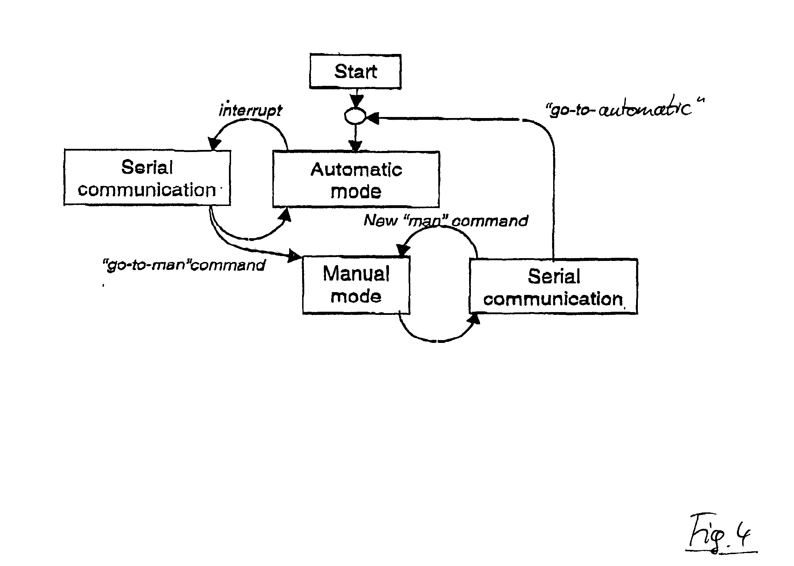

Fig. 4 shows a status diagram representing various operational status of the optical communication system according to the present invention.

With the remote unit the system can be switched between the following operation modes:
- manual mode, in which the system executes commands from the remote unit, and
- automatic mode, in which the system autonomously operates to maintain the best possible signal quality.

In the manual mode the system carries out the following main functions:
- adjustment of transmitter focussing (z)
- adjustment of transmitter fibre position in the focal plane (x, y)
- adjustment of the receiver focussing (z)
- adjustment of receiver fibre position in the focal plane (x, y),
- telemetry and service functions, and
- tip-tilt adjustment by the gimbal.

In the automatic mode the system carries out the following main functions:
- focal plane scan for link establishment of a communication link, and
- auto-tracking

As is illustrated in Fig. 4, when the system is switched on, it goes to the automatic mode. If a "go to manual" command is issued by the remote device, the automatic mode is interrupted and the system switches to the manual mode in which it is possible to remotely control the position of the eight positioners included in the system. The manual mode is kept until a "go to automatic" command is issued through the serial communication port. The system then restarts automatic operation.

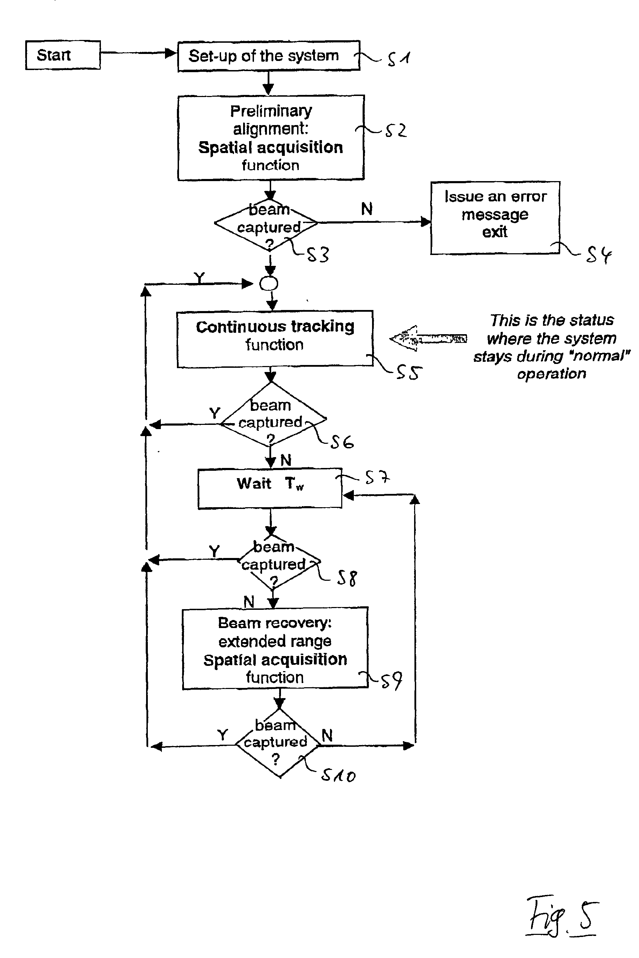

The automatic auto-tracking operation is schematically illustrated in the flowchart of Fig. 5. The system is set up in method step S1 whereupon a preliminary alignment is performed in step S2 using a link establishment function which will be discussed in more detail below. In step S3 it is checked whether or not the beam is captured, i.e. if the link establishment function has been performed successfully and the communication link is locked on. If a successful alignment cannot be carried out, an error message is output in step S4. If the alignment was successful the system carries out the continuous tracking function in step S5. This function is the normal operation mode of the system details of which will be discussed later. It is then regularly checked in step S6 whether or not the beam is still captured. If a "non-captured" condition persists more than a predetermined waiting time T_{E} the initial link establishment function is carried out again and if this has been successful the system returns to the continuous tracking function.

With the term "beam captured" is defined the condition in which the light transmitted by the transmitter sector of a unit of a binocular system is received by the fibre in the focal plane of the receiver section of the other unit at an intensity level over a predetermined sensitivity threshold. This is the condition required to start the continuous tracking algorithm. It is satisfied if the following conditions are both satisfied:
- binocular 1 is included in the cone of light emitted by binocular 2, and
- the spot focussed in the receiver focal plane of binocular 1 is at least partially intercepted by the fibre of the receiver.

For setting up the optical communication system the two binocular units are placed on their pedestal and after connecting them to the corresponding indoor optic and electronic equipment the electronic devices can be switched on. The transmitter and receiver positioners 35, 36 (see Fig. 3) move the respective fibre to the x-y-z-position (0, 0, 0) of a respective telescope which is defined in advance during calibration of the unit. These positions correspond to the maximum intensity of the spot when the unit is perfectly aligned to a plane parallel wave front. After the operator introduces the distance between the two units, the transmitter and receiver positioners move the fibre into a z-position dependent on the distance between the two communication units. Typical Δz-positions of a specific example embodiment are depicted in the following table:

**TABLE 1**

| **Distance between the units [m]** | **Δz [mm] of the emitter** | **Δz [mm] of the emitter** | **Divergence angle [mrad] of the emitted beam** | **Cone ⌀ at the receiving entrance pupil dist. [mm]** | **Total loss [dB]** |
|---|---|---|---|---|---|
| 10 | -4 | 3.50 | 23.3 | 233 | 1.3 |
| 20 | -4 | 3.07 | 13.3 | 267 | 2.5 |
| 50 | -4 | 2.24 | 7.3 | 367 | 5.2 |
| 100 | -4 | 1.55 | 5.3 | 534 | 8.5 |
| 200 | -4 | 0.96 | 4.3 | 869 | 12.8 |
| 500 | -4 | 0.45 | 3.7 | 1870 | 19.4 |
| 500 | -2 | 0.40 | 2.1 | 1063 | 14.5 |
| 1000 | -2 | 0.22 | 1.9 | 1925 | 19.7 |
| 1000 | -1 | 0.20 | 1.1 | 1121 | 15.0 |
| 2000 | -1 | 0.11 | 1.0 | 2041 | 20.2 |

The necessity to maintain the emitting fibre in an intra-focal position is to increase the divergence of the emitted beam. This has two important advantages that allow to obtain the link between the two units without any service channel:
(1) The illuminated area at the entrance pupil of the receiving telescope is larger. When the pointing direction of the emitting unit is not perfectly aligned towards the receiving unit, the light is then still intercepted by the receiving unit and, after the receiving fibre locates the maximum of the spot, the link is established.
(2) It permits, after shift of the spot in the focal plane of the receiving unit takes place, to establish whether this shift has been generated by the tilt of the emitter unit or of the receiving unit. It can be demonstrated that, by placing the light source perfectly in the focal plane of the emitter unit, the system is exactly symmetrical and therefore a movement of the spot in the focal plane of the receiving plane can be caused by a tilt of the same amount of the receiving unit or of the transmitting unit. In this situation an ambiguity is generated and the system is not able to establish and to maintain the link. On the contrary, by placing the emitting fibre in an intra-focal position, the system is no more symmetrical and a shift of the spot in the focal plane of the receiving unit is mainly due to a tilt of the receiving unit. Therefore each unit is insensitive to the tilts that occur in the linked unit. By moving in parallel the receiving and emitting fibres of each unit in the same (x, y) position the system converges to a configuration in which the emitting and the receiving unit are perfectly aligned and therefore the link is optimally established.

### Link establishment

The purpose of the link establishment function is to establish the preliminary alignment when the system operation is started and to recover the link when it is lost due to a sudden variation in the pointing of the systems.

After the manual prealignment between the units has been completed the "beam captured" condition is typically not satisfied. The spatial position function permits to establish the link between the two units, after which the auto-tracking function maintains it under external disturbances.

Each binocular can pilot its transmitter section according to the information received from its receiver section and it is expected that the other binocular is doing the same.

The link establishment process described in the following is based on the assumptions that when the link establishment starts:
- the maximum misalignment of the transmitter towards the direction of the linked receiver is within the value of divergence of the emitted beam so that at least some light arrives in the entrance pupil of the receiver, and
- the misalignment of the receiver towards the direction of the linked transmitter is within the maximum compensation that can be obtained by moving the receiving fibre entrance plane in its x-y-plane.

Under verification of these two assumptions the following method steps permit to obtain the link establishment function.

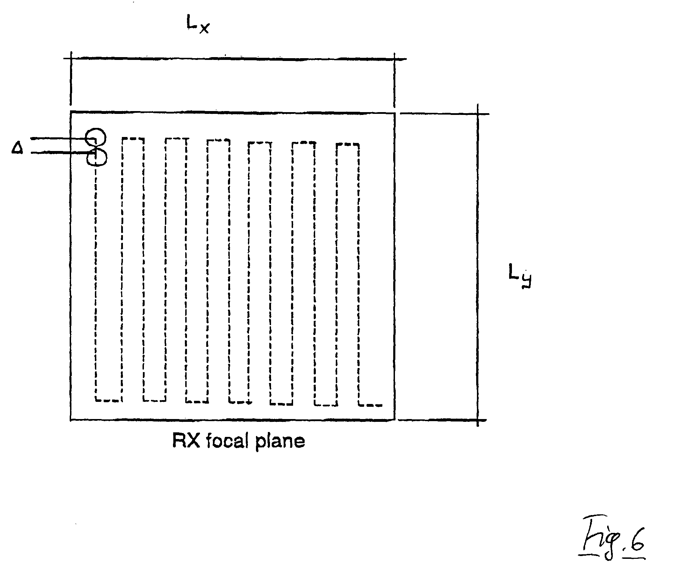

The receiver fibre scans in the focal plane (or a parallel plane) in a square area of for example 3mm x 3mm around the point (0, 0) defined in advance with a scanning step Δ of e.g. Δ = 50µm as is schematically shown in Fig. 6. The x-y-position in which the maximum light intensity is received is detected by the signal detection unit 39. After waiting for a predetermined time T_{w} (the delay of the starting time of the link establishment of the two units) both the transmitter and receiver fibre of each unit move to the point of maximum detected light intensity. After waiting for the predetermined waiting time T again the foregoing scanning and positioning steps are repeated with smaller scanning areas, for example 0.3mm x 0.3mm.

The following table 2 shows the maximum angles that can be recovered during the link establishment. As the table shows, this angle depends on the distance between the two units. It is 6mrad for distances below 70m and varies between 6mrad and 1mrad for distances between 70m and 2000m.

**TABLE 2**

| **Scan in the RX pfocal plane (mm) distance** | **Related angle of the incoming beam (mrad)** |
|---|---|
| 0.05 | 0.1 |
| 0.3 | 0.6 |
| 1.8 | 3.6 |
| 3 | 6.0 |
| 5 | 10.0 |
| 10 | 20.0 |

The range of the link establishment can be extended by moving also the emitting fibre link in the x-y-plane. In the given example a scan area of 3mm x 3mm of an emitting fibre can increase the maximum mispointing angle that can be compensated to 7mrad for an arbitrary distance.

### Continuous tracking function

The purpose of this function is the maximization of the radiation energy intercepted by the receiving optical fibre. To start the continuous tracking operation a condition of "beam captured" has to be present.

During the continuous tracking mode a certain amount of divergence is preferably maintained in the transmitter (TX) so that the position of the spot in the linked receiver (RX) gets correlated mainly to the mispointing of the RX while it is insensitive to the mispointing of the TX as has been explained earlier. In this way the spot image position found in the receiver and immediately transferred to the fibre of the transmitter of the same binocular permits to realign correctly the binocular with the direction of the linked system.

The maximum total misalignment of each unit that can be compensated is related to the maximum movement distance of the fibres. If the telescopes have an effective focal length of 500mm and the maximum scan area of the fibres is 6mm x 6mm, the maximum misalignment that can be compensated is 6mrad in any direction.

The maximum frequency and speed of the misalignment that can be compensated is related to the characteristics of the x-y-positioners 35, 36 supporting the fibre entrance plane. Two embodiments of an auto-tracking operation are presented herebelow; one is based on the assumption to place a single receiving fibre in the focal plane of the receiver, while the other describes the auto-tracking function using a fibre bundle.

The single fibre solution features lower manufacturing and material costs. However, it increases the time necessary to scan the focal plane of a receiver telescope. On the other hand, the fibre bundle embodiment features shorter response time but encounters higher production costs.

Depending on different environmental conditions in which the system is used one of the two embodiments may be chosen by the skilled person.

### (1) First embodiment - single fibre approach

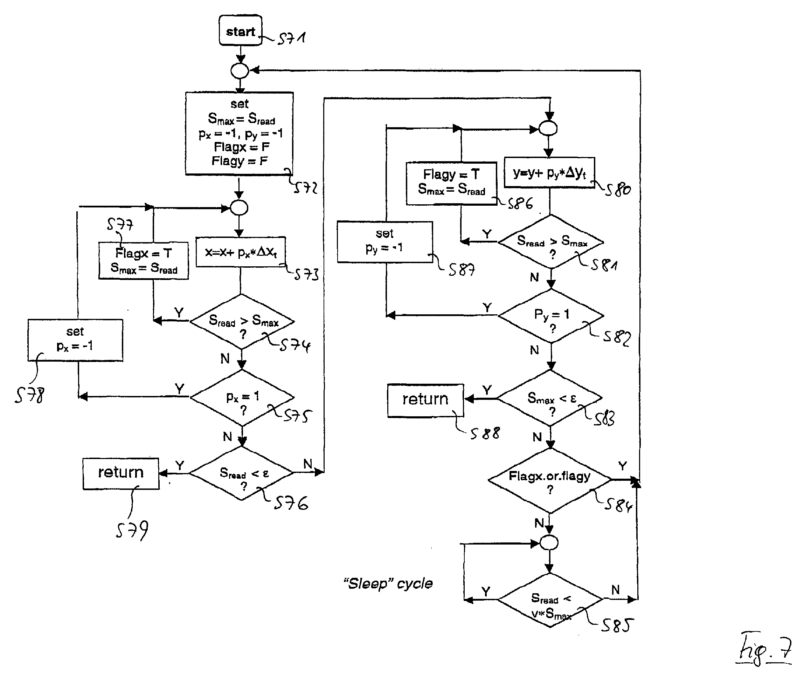

With the single fibre approach the determination of the shift of the spot in the RX focal plane is determined by inducing very small and fast movements of the fibre and sampling the intensity of the incoming light. If a higher illumination is found, the fibre is moved into the new position, otherwise it returns to the initial one. This continuous movement is depicted in the flowchart of Fig. 7.

After start of the operation (step S71) the default conditions are set in step S72. In step S73 a movement of the fibre in x direction by a distance Δxₜ is performed. The light intensity S is detected and compared with the initial light intensity Sₘₐₓ. If the detected light intensity is larger than Sₘₐₓ then the fibre is moved this position and the intensity is set to the new value S_{red} in step S77. If the detected light intensity is not larger than the initial value the method proceeds to step S75 where it is checked whether Px has the value 1. If this is the case the default value Pₓ = -1 is again set. If not it is checked whether or not the detected light intensity exceeds the minimum value (step S76). If this is not the case the algorithm returns in step S79 to the starting point S71.

If the intensity exceeds the minimum level the same steps are carried out for the y-direction (steps S82, S83, and S86 to S88). After checking the flag x and flag y status in step S84 the procedure returns to the starting point or proceeds to the so-called sleep cycle (step S85), in which the detected intensity is compared with the default intensity multiplied with a predetermined parameter v.

### (2) Second embodiment: fibre bundle approach

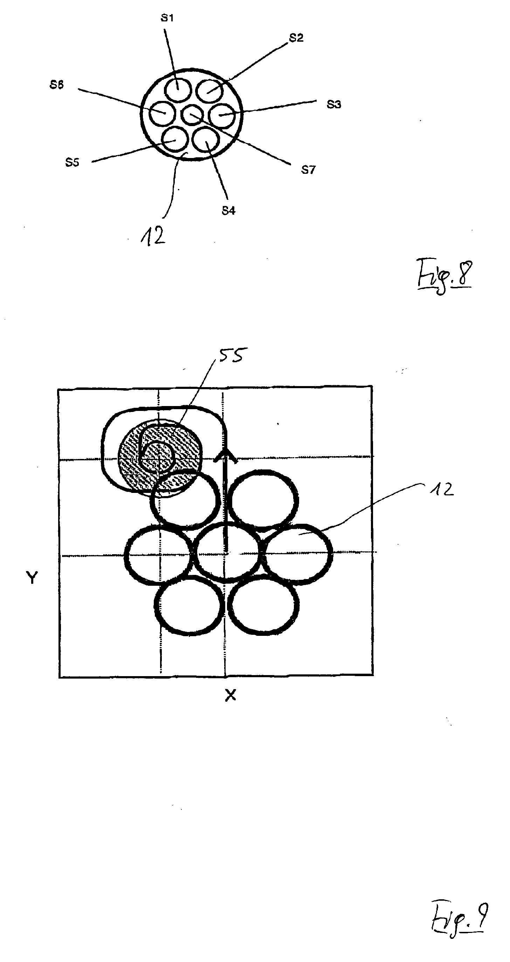

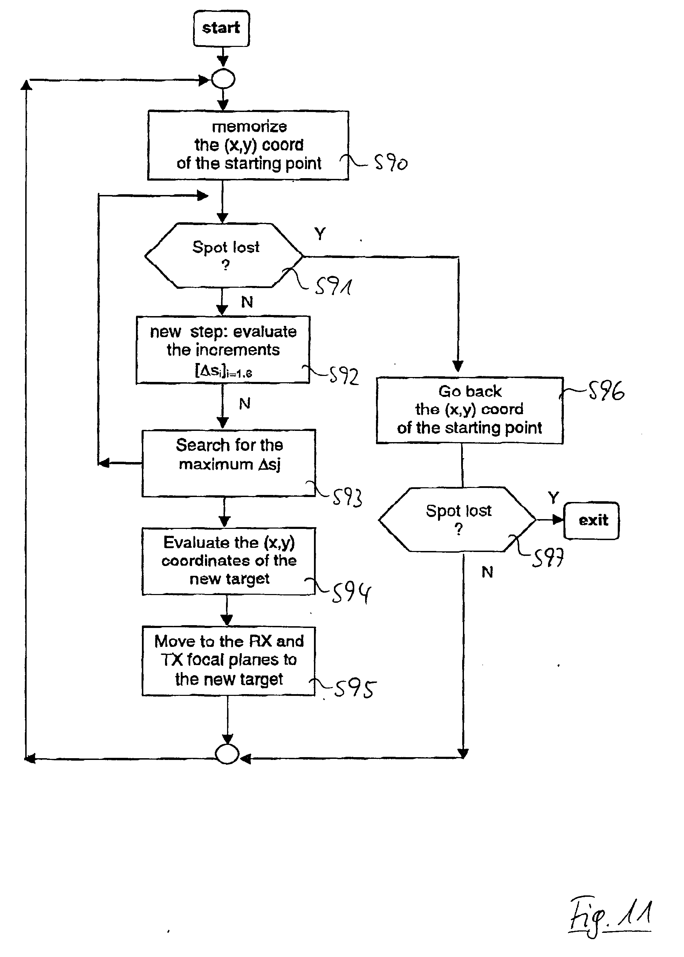

In the second embodiment the receiving optical fibre consists of a fibre bundle of, for example, seven optical fibres, as is schematically shown in Fig. 8. The central fibre S7 produces the output signal Xout via a beam splitter 49 as is shown in Fig. 10, while the signal of all fibres S1 to S7 are input to the signal detection unit 39, which compares the signal levels of the outer fibres S1 to S6 with that of the central fibre S7.

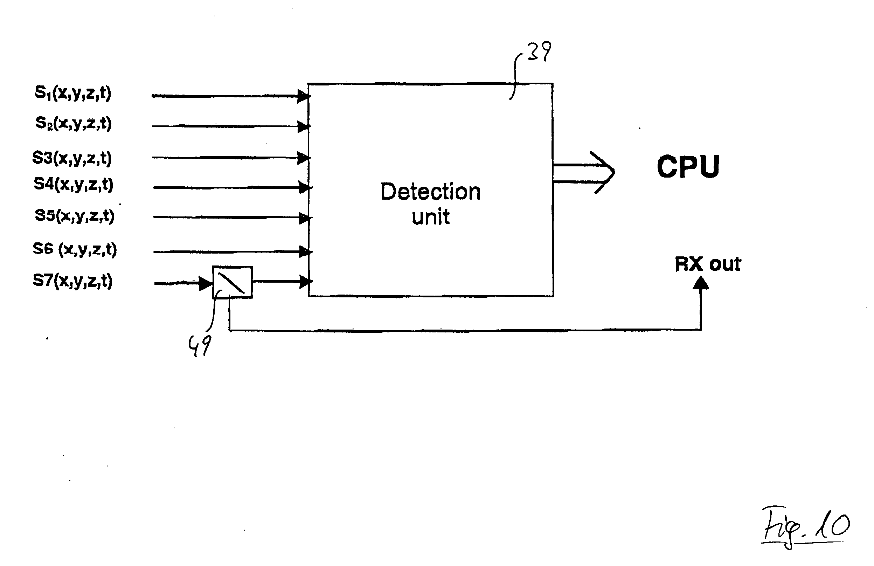

The operation of the continuous tracking function according to the second embodiment will now be explained with reference to Figs. 9 and 10. It is assumed that at least one of the signals Sᵢ (x, y, z) at the signal detection unit exceeds the specified threshold value. The method starts with step S90 (see Fig. 11) in which the x-y-coordinates of the central fibre S7 at the starting point is memorized. In step S91 it is checked whether or not the beam spot is lost (i.e. whether or not the just mentioned minimum intensity criterium is not fulfilled). If this is the case the fibre bundle is moved back to the starting point. If the spot is detected, in step S92, the increment ΔSi = Si - S7 of the outer fibres with respect to the central fibres are detected. The index j corresponding to the maximum increment ΔSj is selected and the direction (ΔXj, ΔYj) as the difference between the fibre centre coordinates (ΔXj, ΔYj) = (Xj - X7), (Yj - Y7) is evaluated (step S93). The process then checks the x-y-coordinates of the new target position in step S94 and moves the fibre bundle to the new target position (step S95). With this method the fibre bundle is continuously moved to the position of light spot 55 as is depicted in Fig. 9.

Both embodiments of continuous auto-tracking function thus allow the maintenance of a stable and high quality communication link.

The invention is also applicable to different variations of the system, four examples of which are mentioned below.

### (1) "Monocular"

Every unit consists of a single telescope acting as an emitter and a receiver at the same time. In its focal plane different fibre systems can be present. A single fibre for emission and transmission or a bundle of two fibres, one for emission and the other for transmission. These systems can be surrounded by additional fibres for detecting the received light intensity as discussed above in connection with the second embodiment of the auto-tracking operation. The auto-tracking algorithms described above in connection with the binocular system substantially remain valid also for the single telescope "monocular" solution.

### (2) "Lens emitter"

The auto-tracking and link establishment operations described above also work if the transmitter telescope is replaced by a refracting system having a smaller size diameter.

### (3) "Service channel"

The introduction of a service communication channel at low bit rate (using for instance a radio link) between the two separate units for the purpose of auto-tracking can speed up this operation and improve the communication of faults of operation between the units.

### (4) "Beacon"

An additional light source (beacon) with an additional detection unit (CCD camera) in the receiver telescope could give instantaneously the positioning status of the receiver telescope permitting the correction of the alignment very quickly.

### List of reference numerals

- RX1: receiver telescope 1
- TX1: transmitter telescope 1
- RX2: receiver telescope 2
- TX2: transmitter telescope 2
- 10: primary mirror
- 11: secondary mirror
- 12: optical fibre entrance plane
- 21: first unit
- 22: second unit
- 23, 24: variable focal plane systems
- 25, 26: remote interface unit
- 27: fibreless link
- 31: transmitter telescope
- 32: receiver telescope
- 33: emitting optical exit plane
- 34: receiving optical entrance plane
- 35, 36: x-y-z-positioners
- 37, 38: position controller
- 39: signal detection unit
- 40: central processing unit
- 49: beam splitter
- 55: beam/spot

## Claims

1. A free space optical communication system comprising a first unit (21) having a first transmitter (TX1) and a first receiver (RX1) and a second unit (22) having a second receiver (RX2) corresponding to the first transmitter and a second transmitter (TX2) corresponding to the first receiver,
wherein each of the first and second transmitter and the first and second receiver comprises a reflective optical telescope (10, 11), an optical fibre (12) positioned in the focal region of the reflective optical telescope, and a positioning unit (35, 36, 37, 38) for moving the optical fibre entrance plane (12) in the direction of the optical axis of the telescope and within a plane perpendicular thereto.

2. The free space optical communication system of claim 1, wherein, in the first unit (21) and in the second unit (22), the optical axis of the transmitter telescope is oriented parallel to the optical axis of the receiver telescope.

3. The free space optical communication system of claim 1 or 2, further comprising a remote control unit for controlling and monitoring the operation of the transmitting telescopes and the receiving telescopes of the first and second unit.

4. An optical transmitter unit comprising:
- a reflective optical telescope (10, 11; 31),
- an emitting optical fibre (12) positioned in a focal region of the telescope,
- a z-positioning unit for moving the emitting optical fibre exit plane in the direction of the optical axis (z-axis) of the telescope for varying the beam divergence of the light beam emitted by the telescope, and
- an x-y-positioning unit for moving the emitting optical fibre exit plane in the x-y-plane perpendicular to the optical axis of the telescope for varying a beam direction of the light beam emitted by the telescope.

5. The optical transmitter unit of claim 4, wherein the optical telescope comprises a primary mirror (10) and a secondary mirror (11) for transforming a light beam emitted by the emitting optical fibre exit plane into a substantially parallel light beam.

6. An optical receiver unit comprising:
- a reflective optical telescope (10, 11; 32),
- a receiving optical fibre entrance plane (12) positioned in the focal region of the telescope,
- a z-positioning unit for moving the receiving optical fibre entrance plane in the direction of the optical axis (z-axis) of a telescope, and
- an x-y-positioning unit for moving the receiving optical fibre entrance plane in an x-y-plane perpendicular to the optical axis of the telescope.

7. The optical receiver unit of claim 6 comprising a primary mirror (10) and a secondary mirror (11) for concentrating an incoming electromagnetic wave into the receiving optical fibre.

8. A method of aligning the positions of an optical transmitter unit (TX1, TX2) and a corresponding optical receiver unit (RX1, RX2), the receiver unit comprising a reflective optical telescope with a receiving optical fibre entrance plane positioned in the focal region of the telescope, the method comprising the steps of:
- determining the intensity distribution of a received light in the focal plane of the telescope,
- moving the optical fibre entrance plane to the position within the focal plane receiving the highest light intensity, and
- moving the optical fibre entrance plane of the TX section in the same x, y position of the RX section of the same unit.

9. The method of claim 8, wherein the intensity distribution within the focal plane of the telescope is determined by a scanning movement of the receiving optical fibre entrance plane.

10. The method of claim 9, wherein the scanning operation is carried out in consecutive steps with a decreasing scanning area.

11. The method of claim 9, wherein the area and speed of the scanning movement is adapted to the detected intensity variation within the focal plane of the receiver telescope.

12. The method of claim 8, wherein the receiving optical fibre entrance plane is a bundle comprising a plurality of parallel fibres and wherein the intensity distribution is determined by comparing the light intensity received by the different fibres.

13. The method of one of claims 8 to 12, wherein the aligning operation is carried out continuously using a feedback loop.

14. The method of any one of claims 8 to 13, wherein the aligning operation is carried out as an initial setup operation or after an interruption of an optical communication between the transmitter unit and the receiver unit, until a predetermined threshold value of the received light intensity is detected.

15. The method of any one of claims 8 to 14, wherein the optical transmitter unit comprises a reflective optical telescope having an emitting optical fibre positioned in the focal region of the telescope, comprising the step of
moving the optical fibre entrance plane of the transmitter section in the same x, y position of the receiver section of the same unit.

16. The method of any one of claims 8 to 15, wherein the emitting optical fibre entrance plane is positioned in an intra-focal position of the transmitter telescope resulting in a divergent beam.

17. A free space optical communication method between a transmitter telescope and a reflective receiver telescope having a receiving optical fibre entrance plane positioned in the focal region of the receiver telescope, the method comprising the steps of:
- transmitting a visible or infrared light beam carrying the user information from the optical transmitter telescope to the optical receiver telescope,
- determining the received light intensity in a plane perpendicular to the optical axis of the receiver telescope, and
- moving the receiving optical fibre entrance plane into a position within the x-y-plane receiving the highest light intensity.

18. The free space optical communication method of claim 17, wherein the transmitter telescope is a refractive telescope.

19. The free space optical communication method of claim 17, wherein the transmitter telescope is a reflective telescope having an emitting optical fibre exit plane positioned in the focal region of the telescope.

20. The free space optical communication method of claim 19, wherein the emitting optical fibre exit plane is moved along the optical axis of the transmitter telescope for controlling the received light signal level.

21. The method of one of claims 17 to 20 including an initial alignment operation of the receiver telescope with respect to the transmitter telescope, said method comprising the step of moving the receiving optical fibre entrance plane within the focal plane of the receiver telescope until a light signal exceeding a predetermined threshold value is detected.

22. The method according to any one of claims 19 to 21, wherein the emitting optical fibre entrance plane is positioned in an intra-focal position of the transmitter telescope in dependence of the distance between the transmitter telescope and the receiver telescope.

23. The free space optical communication method of any one of claims 19 to 20 employing two units having a transmitter and receiver with parallel optical axis, wherein the light intensity distribution detected by the receiver telescope is used to align the transmitter telescope.

24. The free space optical communication system of one of claims 1 to 3, further comprising a gimbal positioner (101).

25. The free space optical communication system of one of claims 1 to 3, further comprising an additional low bandwidth communication channel between the first unit and the second unit.

26. The free space optical communication system of one of claims 1 to 3, wherein the receiver telescope comprises an additional light source and an additional detection unit for detecting the positioning status of the receiver telescope.

27. A free space optical communication system comprising a first monocular transceiver unit and a second monocular transceiver unit, each of the first and second transceiver units comprising a single reflective optical telescope with at least an optical fibre positioned in the focal region of the telescope and a positioning unit for allowing a three-dimensional movement of the optical fibre entrance/exit plane.
